# EUROPEAN PATENT SPECIFICATION

(11) **EP 0 477 279 B1**
(45) Date of publication and mention of the grant of the patent: **13.08.1997**
(21) Application number: 90910005.9
(22) Date of filing: 07.06.1990
(51) Int. Cl.: H04Q 7/00

(54) **PAGING SYSTEM WITH LOCAL CHANNEL LISTS**
RUFSYSTEM MIT LOKALEN KANALVERZEICHNISSEN
SYSTEME DE TELEAPPEL A LISTES LOCALES DE CANAUX

(30) Priority: 16.06.1989 US 367207
(43) Date of publication of application: 01.04.1992
(73) Proprietor: SEIKO COMMUNICATIONS HOLDING N.V., Curacao (AN)
(72) Inventor: KING, Randolph, E., Beaverton, OR 97007 (US); Gaskill, Garold, B., Tualatin, OR 97062 (US)
(74) Representative: Cross, Rupert Edward Blount
(86) International application number: US9003234
(87) International publication number: WO9100676

(56) References cited:
- US-A- 4 253 194
- US-A- 4 392 242
- US-A- 4 398 192
- US-A- 4 419 765
- US-A- 4 802 240
- US-A- 4 849 750

## Description

The present invention relates to paging systems, and more particularly relates to techniques for limiting the number of channels a paging receiver must scan to find a channel carrying paging data.

Paging receivers sometimes include the capability to scan across a predetermined frequency spectrum to locate a channel carrying desired paging data. The scanning operation, however, is energy intensive and reduces the battery life available for the more productive task of receiving pages.

The power consumed by the scanning process is directly related to the number of channels examined. A method has been devised to reduce the number of channels that are examined and thereby increase the battery life. This method involves transmitting with each paging signal a list of paging channels that are in use in the area surrounding the transmitting station. On finding one station, the receiver is thus provided a small local list of other stations that it can examine for data if the original station is lost, obviating the need to scan the entire frequency spectrum.

Clearly, in order for a paging system to operate according to this method, each paging receiver must include memory for storing a received local list of station frequencies, or channels, to be scanned.

WO 89/04027 discloses a paging receiver with dynamically programmable functionality, suitable for use in such a system, which can be dynamically programmed with a list of frequencies to be scanned and includes a channel memory for storing these frequencies and an operation channel section for storing a last received channel frequency. The ability of the disclosed pager to be programmed with channel frequencies also permits its use in a variety of geographical areas and enables the switching from channel frequencies which are heavily used during peak paging times to lesser used channels.

The above technique of transmitting a small local list with each paging signal works well. However, in certain situations it is impractical for each transmitter to send a unique list of surrounding stations. This is the case when a plurality of geographically diverse stations are provided the same paging data through a network of relay stations.

If only one list is transmitted in such a wide area network, the receiver may attempt to scan channels that are not in use in the current location. In this event, the list is a detriment to finding paging signals, not an aid. The alternative is to include a comprehensive list that includes all the paging channels throughout the network. However, such a list is likely to be so long as to provide no benefit in locating a suitable paging channel.

It is an object of the present invention to provide local channel lists to paging receivers served by networked paging transmitters.

It is another object of the present invention to broadcast a plurality of local channel lists and to permit individual paging receivers to identify the list pertinent to their particular geographical area.

The present invention provides a method of operating a paging radio receiver in a paging system which includes: a plurality of said receivers which are individually addressable mobile paging radio receivers for receiving signals containing paging messages, each of said paging radio receivers having stored therein a respective local channel list through which it scans to find a particular channel on which it can reliably receive said paging messages, and having further stored therein information identifying said particular channel on which it is operating at any particular time; and a plurality of transmitters, each of which transmits the same data stream including paging messages and a plurality of said local channel lists, the method being characterised by the steps of: receiving at said paging radio receiver said plurality of transmitted local channel lists and utilising said received local channel lists in conjunction with said stored particular channel information to permit said paging radio receiver to ignore certain received local channel lists and to store one received local channel list relevant to said stored particular channel.

The present invention also provides a method of operating a paging system including a plurality of transmitters and a plurality of individually addressable mobile paging radio receivers for receiving signals containing paging messages, the method comprising the steps of storing in each of said paging radio receivers a respective local channel list through which it scans to find a particular channel on which it can reliably receive said paging messages, and storing in each of said paging radio receivers information identifying said particular channel on which it is operating at any particular time, characterised by the further steps of: transmitting from each transmitter the same data stream including paging messages and a plurality of said local channel lists; and, at each of said paging radio receivers, receiving said plurality of transmitted local channel lists and utilising said received local channel lists in conjunction with said stored particular channel information to permit the paging radio receiver to ignore certain received local channel lists and to store one received local channel list relevant to said stored particular channel.

Embodiments of the present invention will now be described with reference to the drawings, in which:-
Fig. 1 is a schematic block diagram illustrating a paging system that may use an embodiment of the present invention;
Fig. 2 is a schematic block diagram illustrating a wristwatch paging receiver used in the system of Fig. 1;
Fig. 3 is a block diagram illustrating the partial contents of a microprocessor memory used in the paging receiver of Fig. 2;
Fig. 4 is a map illustrating the geographical location of a plurality of paging transmitters in an area served by networked paging transmitters.
Fig. 5 is a flow chart illustrating a search procedure to locate a channel list relevant to a receiver's current geographical location.

For expository convenience, embodiments of the present invention will be illustrated with reference to a paging system (the "Gaskill" system) described in U.S. Patent 4,713,808.

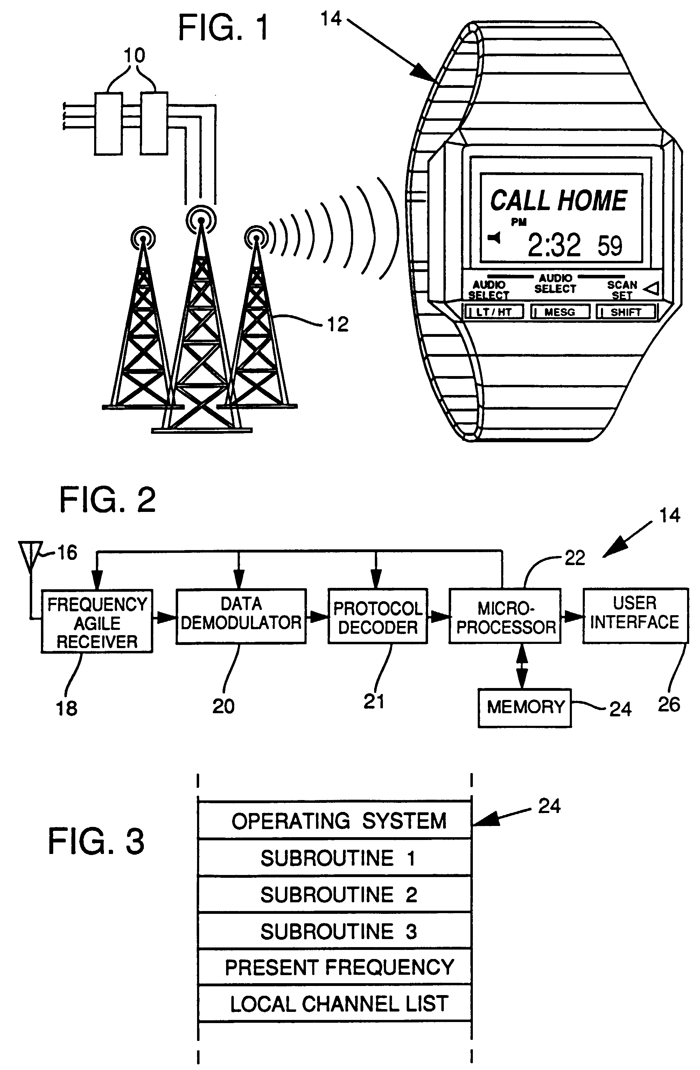

As shown in Fig. 1, the Gaskill system includes clearinghouses 10, broadcasting facilities 12 and wristwatch paging receivers 14. The clearinghouses 10 are fully automated centralized facilities which accept messages, validate customer identification, determine message destinations and route messages to the appropriate broadcast facilities for transmission. Callers to the system dial a local clearinghouse telephone number and hear voice prompts which guide them through a simple process for sending messages.

The broadcast facilities 12 are typically conventional FM broadcast stations that carry paging data on subcarriers of their signals. Multiple stations are used for transmission in a given area. Diversity of signals combined with repeated transmission insures the paging subscribers receive their messages with a high degree of reliability.

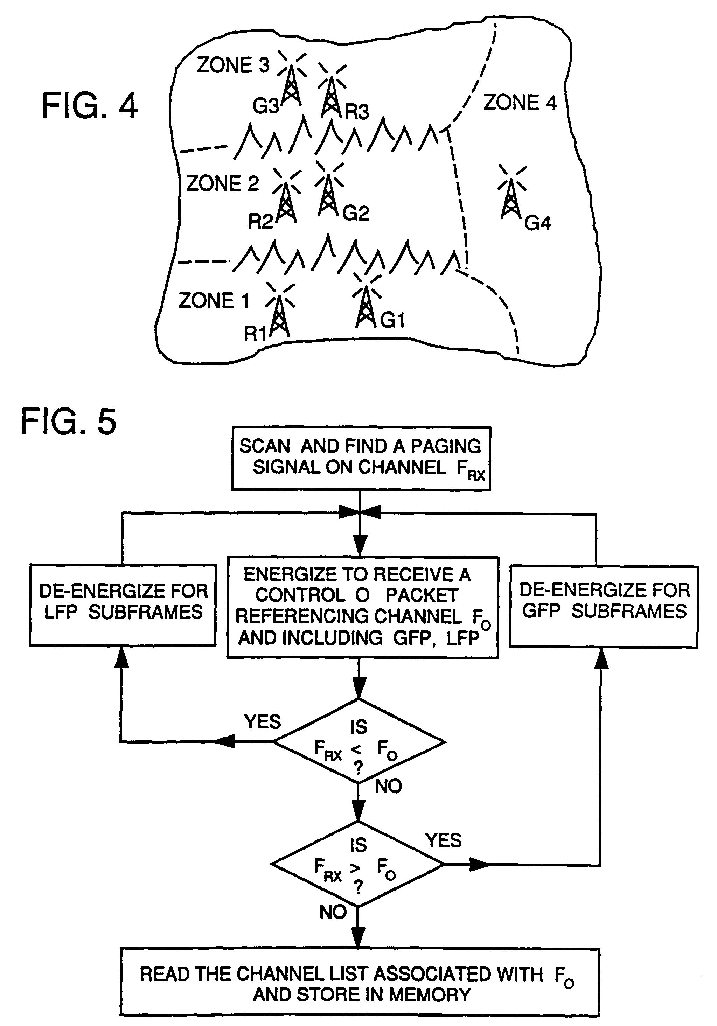

The wristwatch paging receivers 14 are worn by the customers and receive the paging messages broadcast by the broadcast facilities. A block diagram of such a receiver is shown in Fig. 2. The receiver includes an antenna 16, a frequency agile receiver 18, a data demodulator 20, a protocol decoder 21, a microprocessor 22 (with associated memory 24) and a user interface 26. Memory 24 contains various data and programs relating to operation of the watch, such as a subroutine for finding a new station, a subroutine for obtaining a local channel list (such as the subroutine shown in the flow chart of Fig. 5), a datum indicative of the frequency to which the watch is presently tuned, and a local channel list. Fig. 3 illustrates some of the contents of this memory 24.

To review operation of the receiver briefly, antenna 16 receives radio frequency signals in the desired reception band (here 88 to 108 MHz) and couples them to the frequency agile receiver 18. The frequency agile receiver 18 processes the RF signals from the antenna and produces baseband output signals corresponding to a desired FM station within the reception band -- typically an FM signal carrying the paging data on an SCA subcarrier thereof. This SCA paging data is detected by the data demodulator 20, decoded by the protocol decoder 21 and is provided to the microprocessor 22 for processing. The microprocessor 22 drives the user interface 26 to alert the user of paging messages.

The paging signals received by the receiver 14 are formatted as sequences of packets. The first three packets of each sequence are termed "control" packets. The first of the control packets is termed the "control 0" packet and contains in this embodiment the date and time and the first entry of a channel list. The second packet is termed the "control 1" packet and contains the other entries in that channel list. The third packet is a spare. These three control packets are followed by 1024 "data" packets in which the paging data is transmitted. Subsequent sequences are similarly formatted but may contain different channel lists in their control packets and typically. contain different paging data in their data packets. A new sequence (or "subframe") of 1027 packets is transmitted every 14.0625 seconds.

Before proceeding further, it may be helpful to hypothesize an application in which an embodiment of the present invention may be used. A map showing the distribution of seven paging transmitters over a wide area is shown in Fig. 4. Transmitters R1, R2 and R3 are provided identical paging data over an RF relay network and are collectively termed the "red" paging network. Transmitters G1, G2, G3 and G4 are also provided identical paging data (different from the red paging data) and are collectively termed the "green" paging network. The frequency of the R1 transmitter is lower than the frequency of the R2 transmitter, which in turn is lower than the frequency of the R3 transmitter. The frequencies of transmitters G1, G2, G3 and G4 are similarly ordered.

These seven transmitters are distributed through four geographical zones, which are typically different urban areas. Mountains or other physical barriers separate zones 1 and 2, and also zones 2 and 3, limiting travel therebetween. No such barrier exists between zones 2 and 4.

All the transmitters in the red network are synchronized with each other, beginning transmission of each subframe at the same instant. The green network is also synchronized. However, the red network is not synchronized with the green network -- there is a time offset between the beginning of a subframe transmission by the red network and the beginning of a subframe transmission by the green network.

Since the data transmitted by each of the red network stations is the same, the lists of frequencies it transmits are also the same. Similarly with the green stations, although the lists they transmit are different from the lists the red stations transmit. Table I shows the channels transmitted in control packets zero and one (C0 and C1) for three sequences transmitted by the red network transmitters:

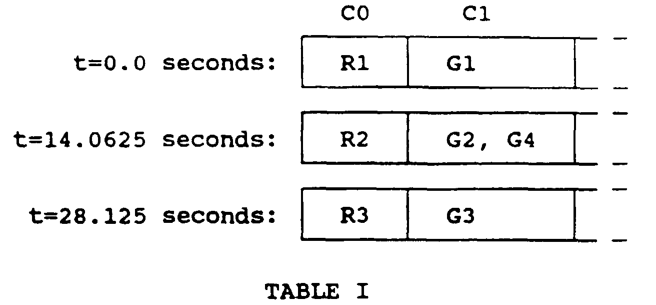

To review, the first sequence of packets in Table I indicates that if the receiver is tuned to the R1 channel, it should store in its local list memory 24 the G1 channel, as well as the R1 channel. It can tune to the G1 channel if the R1 channel becomes unreliable. Similarly, if the receiver is tuned to the R2 channel, it should store the G2 and the G4 channels as alternatives. If the receiver is tuned to the R3 channel, it should store the G3 channel as an alternative.

Table II shows a corresponding set of packets containing the frequency lists broadcast with the paging data over the green network:

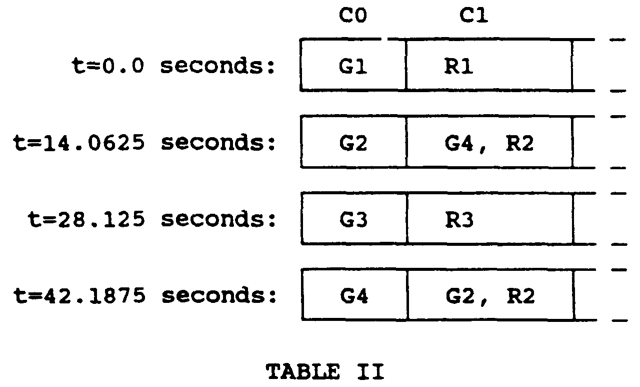

In a first embodiment of the present invention, after a receiver finds a station sending paging signals, it reads the control 0 packet. If the frequency referenced in the control 0 packet matches the frequency to which the receiver is presently tuned, the control 1 packet is read and its contents are stored in the local list memory 24, together with the frequency referenced in the control 0 packet. If the frequencies don't match, the next control 0 packets are read (one at a time) until the frequency referenced in the control 0 packet matches the presently tuned receiver frequency. The list in the associated control 1 packet is then stored (with the presently tuned frequency) in the local list memory.

Actually, the system operation described above requires that the receiver read control packets zero and one in succession. Since a comparison of the frequency referenced in the control 0 packet with the frequency presently tuned must be performed before the relevance of the control 1 packet can be determined, reading two packets in succession can be impractical. In actual implementation, the preferred embodiment transmits the control 1 packet in the subframe following the control 0 packet with which it is associated.

It will be recognized that if the number of lists is large, there may be a multitude of control 0 packets that must be read to identify the proper list. To reduce the number of reads needed to find the proper list (and to reduce the power consumed in the search process), the frequencies in the control packets are desirably sorted or indexed in a way that permits the search to be optimized.

In a second embodiment of the present invention, an index is transmitted periodically in the control 1 packet. This index lists all of the transmission frequencies used in a network, i.e. {f₁, f₂, f₃, f₄, f₅, f₆}. The first subframe following the index lists in its control 1 packet the alternative frequencies to be used by receivers presently tuned to frequency f₁. Similarly, the second subframe following the index lists in its packet 1 the alternative frequencies to be used by receivers presently tuned to frequency f₂. By noting the position of the presently tuned frequency in the index, a receiver knows which subframe to monitor for the relevant list. The receiver can remain deenergized during the intervening subframes.

In this second embodiment, it is important that a newly turned-on receiver be able to find an index packet without listening to all of the control 1 packets. Accordingly, a pointer is desirably sent with each subframe to indicate when (in intervening subframes) the index will next be sent. By this arrangement, a newly turn-on receiver can receive a single packet from a single subframe and deenergize until the next index transmission.

In a third embodiment, an index is not transmitted. Instead, each control 0 packet indicates the number of transmitters in the network. The lists are transmitted in order determined by their first frequency. By knowing how many lists (i.e. transmitters) are being used, and by noting which list is presently being sent, the receiver can approximate when the list it needs may be sent.

To illustrate, assume a network includes ten transmitters, at 88.7, 92.1, 94.3, 95.1, 96.7, 98.3, 100.1, 101.1, 103.5 and 107.9 MHz. If a newly turned-on receiver is tuned to the 103.5 MHz transmitter and the first subframe received contains the channel list used by receivers tuned to the 94.3 MHz transmitter, the receiver may approximate when it should turn on next by assuming the transmitters are uniformly distributed throughout the 20 MHz frequency spectrum. Since the receiver is tuned 9.2 MHz above the frequency of the channel list presently being transmitted, it may compute that it should deenergize for the next three subframes (which it assumes may contain lists for receivers operating at the 96.3, 98.3 and 100.3 MHz transmission frequencies) and monitor the fourth following subframe. The list transmitted at this fourth following subframe actually contains the list for 100.1 MHz, but since this is still below the frequency to which the receiver is presently tuned, the receiver tries again the next subframe (which includes the list for the 101.1 MHz transmitter) and again the following subframe, until it finds the list for the desired 103.5 MHz transmitter. (If, instead of underestimating the number of intervening subframes, the receiver overestimated, it could deenergize for eight subframes [two less than the total number of ten] and try again to receive the proper list.)

A fourth embodiment uses a binary search procedure to locate the correct list from those transmitted. (A binary search basically works to halve the remaining number of possibilities each time a read is made.) To accomplish a binary search, the receiver must again have some data relating to the number of lists being transmitted. In this embodiment, this data takes the form of a "lesser frequency pointer" (LFP) and a "greater frequency pointer" (GFP) transmitted with each control 0 packet and to which the receiver can refer in deciding which subsequent subframe to monitor.

If the frequency in the control 0 packet is less than the currently tuned frequency, the LFP indicates how many subframes the receiver can remain idle before energizing to receive a control 0 packet that references a frequency less than that referenced in the current control 0 packet. If the currently tuned frequency is greater than the frequency in the control 0 packet, the GFP indicates how many subframes the receiver can remain idle before energizing to receive a control 0 packet that references a frequency greater than that referenced in the current control 0 packet. A zero in the LFP means there is no lower frequency than that referenced in the control 0 packet presently being transmitted. A zero in the GFP similarly means there is no greater frequency than that referenced in the control 0 packet presently being transmitted.

Table III shows the control packets continuously transmitted by the stations in the red network in this embodiment:

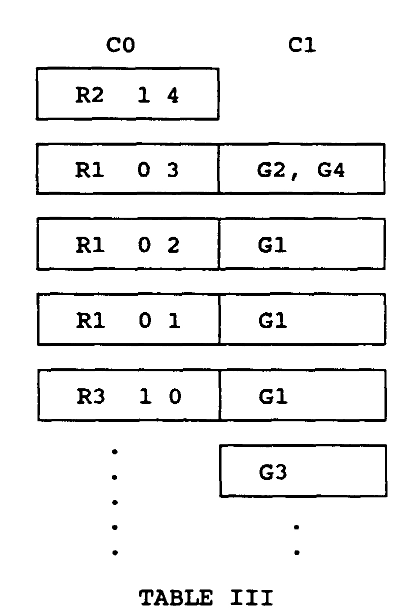

The two numbers in the control 0 packet are the LFP and GFP, respectively.

Table IV shows the control packets continuously transmitted by the stations in the green network:

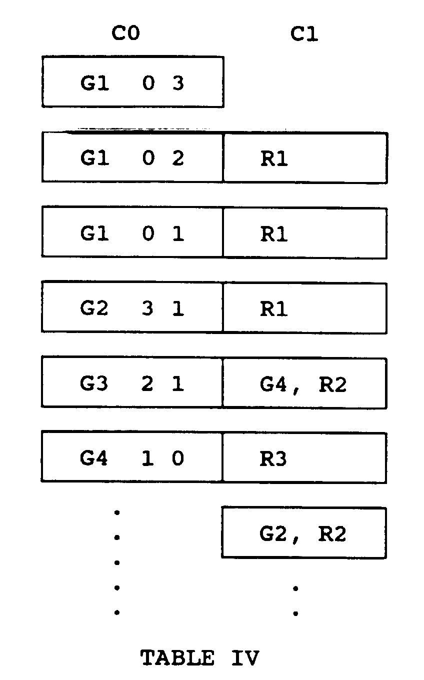

If one station serves a more populated area than the others, it may be listed in the control 0 packets more frequently than the other stations. This provides a greater chance of a receiver finding the correct packet (and thus the correct list) on the first read and thereby decreases the search time for heavily populated areas. In Tables III and IV, zone 1 is assumed to be more populous than the other zones and its transmitters are thus listed more frequently in the control 0 packets.

To illustrate operation of this fourth embodiment, assume a receiver is operating in zone 2. After a scan of all frequencies, station R2 is found. Further assume that the first control 0 packet read from this station is the second of the three R1 packets listed in Table III above. Since the receiver's currently tuned frequency (R2) is greater than the frequency referenced in the control 0 packet (R1) [as noted earlier, the frequencies are ordered, the receiver looks to the GFP pointer for instructions. The GFP pointer is "2", indicating that the next control 0 packet the receiver should read is two subframes away. When the receiver next energizes and reads this subframe, it finds the control 0 packet references station R3. Since the currently tuned frequency (R2) is less than the frequency referenced in the control 0 packet (R3), the LFP is followed. The LFP is "1", indicating that the receiver should read the control 0 packet one subframe away. When the receiver next energizes and reads this control packet, it finds it references the currently tuned frequency (R2) and is thus accepted as the proper control packet. The following subframe's control 1 packet is then read, since the control 1 packet is offset one subframe from the control 0 packet to which it relates. This packet contains the rest of the proper list for R2 (i.e. G2 and G4). The local list of frequencies for the receiver in zone 2 is thus R2, G2 and G4. The foregoing sequence of steps is illustrated by the flow chart of Fig. 5.

Once a receiver has loaded a local channel list into its memory 24, it continues to operate on the original channel until there is a failure in reception, such as receipt of a packet with uncorrectable errors. When such event occurs, the receiver tunes other channels in the local list until good data is again received.

Normally, the stations in a common area do not operate synchronously -- there is a fixed offset period between the beginning of the control 0 packet from one station and the beginning of the control 0 packet from another. The channel list is ordered so that if the current frequency fails, the other channels listed can be sequentially monitored all within the 1.875 minutes of a single frame. However, with networked stations, several transmitters in a zone may be operating synchronously. For example, in zone 2, transmitters G2 and G4 operate synchronously. Consequently, the receiver can tune only one of these stations.

To address this problem, a further aspect of the present invention is to organize the local channel list as a series of columns, as shown in Table V below:

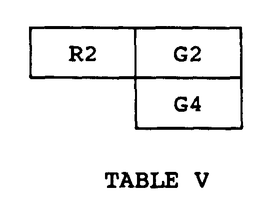

Channels carrying synchronous transmissions are put into the same column. The channels are ordered in increasing offset for a 1.875 minute frame from left to right. As the receiver tunes through the local channel list for a paging channel, it tunes to the top station in each column. If no paging signal (or a corrupted paging signal) is found in a column with two or more channels, the top station is put at the bottom the column and the station next to the top is pushed to the top. Thus, the next cycle through the list, the receiver will tune a different channel. By this arrangement, successive tuning cycles through the local channel list examine different ones of the synchronously operated stations.

## Claims

1. A method of operating a paging radio receiver (14) in a paging system which includes:
a plurality of said receivers (14) which are individually addressable mobile paging radio receivers (14) for receiving signals containing paging messages, each of said paging radio receivers (14) having stored therein a respective local channel list through which it scans to find a particular channel on which it can reliably receive said paging messages, and having further stored therein information identifying said particular channel on which it is operating at any particular time; and
a plurality of transmitters (12), each of which transmits the same data stream including paging messages and a plurality of said local channel lists,
the method being characterised by the steps of:
receiving at said paging radio receiver (14) said plurality of transmitted local channel lists and utilising said received local channel lists in conjunction with said stored particular channel information to permit said paging radio receiver (14) to ignore certain received local channel lists and to store one received local channel list relevant to said stored particular channel.

2. A method of operating a paging system including a plurality of transmitters (12) and a plurality of individually addressable mobile paging radio receivers (14) for receiving signals containing paging messages, the method comprising the steps of storing in each of said paging radio receivers (14) a respective local channel list through which it scans to find a particular channel on which it can reliably receive said paging messages, and storing in each of said paging radio receivers (14) information identifying said particular channel on which it is operating at any particular time,
characterised by the further steps of:
transmitting from each transmitter (12) the same data stream including paging messages and a plurality of said local channel lists; and, at each of said paging radio receivers (14),
receiving said plurality of transmitted local channel lists and utilising said received local channel lists in conjunction with said stored particular channel information to permit the paging radio receiver (14) to ignore certain received local channel lists and to store one received local channel list relevant to said stored particular channel.

3. A method as claimed in Claim 1 or Claim 2, including the step of comparing said stored particular channel information with a channel referenced in one of said received local channel lists, and adopting a local channel list which references said particular channel to which said paging radio receiver (14) is presently tuned.

4. A method as claimed in Claim 3, wherein said comparing step comprises comparing said particular channel information with a first channel referenced in said received local channel lists.

5. A method as claimed in Claim 1 or Claim 2, wherein said step of receiving comprises the steps of:
intermittently energizing said paging radio receiver (14) to receive at least a first datum and a second datum, wherein said first datum is a first entry in said received local channel list;
determining when next to energize based at least in part on said first datum in conjunction with said stored particular channel information;
energizing in accordance with said determining operation and receiving a local channel list relevant to the geographical area in which the paging radio receiver (14) is operating.

6. A method as claimed in Claim 5, wherein said first datum and said second datum comprise entries in a received local channel list index.

7. A method as claimed in Claim 5, including the step of using said second datum to determine when next to energize depending on the relationship of the first datum to the channel to which the paging radio receiver (14) is presently tuned.

8. A method as claimed in Claim 7, wherein the energizing step additionally includes energizing to receive a third datum; the method additionally including the step of using said third datum to determine when next to energize depending on the relationship of the first datum to the channel to which the paging radio receiver (14) is presently tuned.

9. A method as claimed in Claim 2, wherein said step of transmitting includes the step of:
transmitting a plurality of local channel lists and at least one datum related thereto;
and said receiving step includes the step of receiving said datum and using it in conjunction with said stored particular channel information to optimize a search through said plurality of local channel lists for a local channel list relevant to the geographical area in which said paging radio receiver (14) is operating.

10. A method as claimed in Claim 1 or Claim 2, wherein said receiving step comprises the steps of:
a) intermittently energizing said paging radio receiver (14) to receive a channel indicia;
b) deciding based on said channel indicia and on a channel to which said paging radio receiver (14) is presently tuned whether to receive a local channel list associated with said channel indicia, and if so, receiving said local channel list;
c) if step b) results in a decision not to receive a local channel list associated with said channel indicia, then deciding based at least in part on said channel indicia and on the channel to which said radio paging receiver (14) is presently tuned when said radio paging receiver (14) should next be energized;
d) energizing said radio paging receiver (14) in accordance with said deciding step c) to receive at least an additional channel indicia;
e) repeating steps b), c) and d) with the additional channel indicia until a local channel list is received.

11. A method as claimed in Claim 1 or Claim 2, wherein said receiving step comprises the step of:
receiving an index containing a plurality of entries referencing a plurality of local channel lists;
ascertaining which of said entries references a local channel list useful in the receiver's present area;
receiving a local channel list referenced by said ascertained entry; and
storing data corresponding to said received local channel list in a memory (24).

12. A method as claimed in Claim 11, wherein the ascertaining step includes the step of comparing a channel to which the paging radio receiver (14) is presently tuned with an entry in said index.

## Patentansprüche

1. Verfahren zum Betrieb eines Funkrufempfängers (14) in einem Funkrufsystem, das umfaßt:
- eine Mehrzahl der Empfänger (14), die individuell adressierbare mobile Funkrufempfänger (14) zum Empfangen von Funkrufmitteilungen enthaltenden Signalen sind, wobei in jedem Funkrufempfänger (14) eine jeweilige lokale Kanalliste gespeichert ist, die er durchsucht, um einen bestimmten Kanal zu finden, auf dem er die Funkrufmitteilungen zuverlässig empfangen kann, und in dem ferner Information gespeichert ist, die zu jedem bestimmten Zeitpunkt den bestimmten Kanal identifiziert, auf dem er arbeitet; und
- eine Mehrzahl von Sendern (12), von denen jeder den gleichen Datenstrom einschließlich Funkrufmitteilungen und einer Mehrzahl der lokalen Kanallisten sendet,
wobei das Verfahren durch die Schritte **gekennzeichnet** ist:
Empfangen der Mehrzahl von gesendeten lokalen Kanallisten am Funkrufempfänger (14) und Verwenden der empfangenen lokalen Kanallisten in Verbindung mit der gespeicherten bestimmten Kanalinformation, um zu ermöglichen, daß der Funkrufempfänger (14) gewisse empfangene lokale Kanallisten ignoriert und eine für den gespeicherten bestimmten Kanal relevante empfangene lokale Kanalliste speichert.

2. Verfahren zum Betrieb eines Funkrufsystems umfassend eine Mehrzahl von Sendern (12) und eine Mehrzahl von individuell adressierbaren mobilen Funkrufempfängern (14) zum Empfangen von Funkrufmitteilungen enthaltenden Signalen, wobei das Verfahren die Schritte umfaßt:
- in jedem der Funkrufempfänger (14) Speichern einer jeweiligen lokalen Kanalliste, die er durchsucht, um einen bestimmten Kanal zu finden, auf dem er die Funkrufmitteilungen zuverlässig empfangen kann, und
- in jedem der Funkrufempfänger (14) Speichern von Information, die den bestimmten Kanal identifiziert, auf dem er an jedem bestimmten Zeitpunkt arbeitet,
**gekennzeichnet** durch die weiteren Schritte:
- von jedem Sender (12) Senden des gleichen Datenstroms einschließlich Funkrufmitteilungen und einer Mehrzahl der lokalen Kanallisten; und
- an jedem der Funkrufempfänger (14) Empfangen der Mehrzahl von gesendeten lokalen Kanallisten und Verwenden der empfangenen lokalen Kanallisten in Verbindung mit der gespeicherten bestimmten Kanalinformation, um zu ermöglichen, daß der Funkrufempfänger (14) gewisse empfangene lokale Kanallisten ignoriert und eine für den gespeicherten bestimmten Kanal relevante empfangene lokale Kanalliste speichert.

3. Verfahren nach Anspruch 1 oder 2, umfassend den Schritt des Vergleichens der gespeicherten bestimmten Kanalinformation mit einem in einer der empfangenen lokalen Kanallisten in Bezug genommenen Kanal und Übernehmen einer lokalen Kanalliste, die den bestimmten Kanal, auf den der Funkrufempfänger (14) momentan eingestellt ist, in Bezug nimmt.

4. Verfahren nach Anspruch 3, bei dem der Vergleichsschritt umfaßt: Vergleichen der bestimmten Kanalinformation mit einem ersten Kanal, der in den empfangenen lokalen Kanallisten in Bezug genommen ist.

5. Verfahren nach Anspruch 1 oder 2, bei dem der Schritt des Empfangens die Schritte umfaßt:
- intermittierendes Anschalten des Funkrufempfängers (14), um wenigstens einen ersten Datenwert und einen zweiten Datenwert zu empfangen, wobei der erste Datenwert ein erster Antrag in der empfangenen lokalen Kanalliste ist;
- wenigstens teilweise auf Grundlage des ersten Datenwerts in Verbindung mit der gespeicherten bestimmten Kanalinformation Bestimmen, wann das nächste Mal anzuschalten ist;
- Anschalten in Übereinstimmung mit der Bestimmungsoperation und Empfangen einer lokalen Kanalliste, die für den geographischen Bereich relevant ist, in dem der Funkrufempfänger (14) arbeitet.

6. Verfahren nach Anspruch 5, bei dem der erste Datenwert und der zweite Datenwert Einträge in einem empfangenen lokalen Kanallistenindex umfassen.

7. Verfahren nach Anspruch 5, umfassend den Schritt der Verwendung des zweiten Datenwerts, um in Abhängigkeit von der Beziehung des ersten Datenwerts zu dem Kanal, auf den der Funkrufempfänger (14) momentan eingestellt ist, zu bestimmen, wann das nächste Mal einzuschalten ist.

8. Verfahren nach Anspruch 7, bei dem der Anschaltschritt zusätzlich umfaßt:
- Anschalten, um einen dritten Datenwert zu empfangen;
wobei das Verfahren zusätzlich den Schritt umfaßt:
- Verwenden des dritten Datenwerts, um in Abhängigkeit von der Beziehung des ersten Datenwerts zu dem Kanal, auf den der Funkrufempfänger (14) momentan eingestellt ist, zu bestimmen, wann das nächste Mal anzuschalten ist.

9. Verfahren nach Anspruch 2, bei dem der Schritt des Sendens den Schritt umfaßt:
- Senden einer Mehrzahl von lokalen Kanallisten und wenigstens eines sich hierauf beziehenden Datenwerts;
und wobei der Empfangsschritt den Schritt umfaßt:
- Empfangen des Datenwerts und Verwenden des Datenwerts in Verbindung mit der gespeicherten bestimmten Kanalinformation, um eine Suche durch die Mehrzahl von lokalen Kanallisten nach einer lokalen Kanalliste, die für den geographischen Bereich, in dem der Funkrufempfänger (14) arbeitet, relevant ist, zu optimieren.

10. Verfahren nach Anspruch 1 oder 2, wobei der Empfangsschritt die Schritte umfaßt:
a) intermittierendes Anschalten des Funkrufempfängers (14), um einen Kanalindex zu empfangen;
b) Entscheiden auf Grundlage des Kanalindex und eines Kanals, auf den der Funkrufempfänger (14) momentan eingestellt ist, ob eine dem Kanalindex zugeordnete lokale Kanalliste empfangen werden soll, und, falls dies der Fall ist, Empfangen der lokalen Kanalliste;
c) falls Schritt b) eine Entscheidung zum Ergebnis hat, eine dem Kanalindex zugeordnete lokale Kanalliste nicht zu empfangen, dann - wenigstens teilweise auf Grundlage des Kanalindex und des Kanals, auf den der Funkrufempfänger (14) momentan eingestellt ist - Entscheiden, wann der Funkrufempfänger (14) das nächste Mal angeschaltet werden sollte;
d) Anschalten des Funkrufempfängers (14) in Übereinstimmung mit dem Entscheidungsschritt c), um wenigstens einen zusätzlichen Kanalindex zu empfangen;
e) Wiederholen der Schritte b), c) und d) mit dem zusätzlichen Kanalindex, bis eine lokale Kanalliste empfangen wird.

11. Verfahren nach Anspruch 1 oder 2, bei dem der Empfangsschritt die Schritte umfaßt:
- Empfangen eines Index, der eine Mehrzahl von sich auf eine Mehrzahl von lokalen Kanallisten beziehender Einträge enthält;
- Feststellen, welcher der Einträge auf eine in dem momentanen Bereich des Empfängers nützliche lokale Kanalliste Bezug nimmt;
- Empfangen einer durch den festgestellten Eintrag in Bezug genommenen lokalen Kanalliste; und
- Speichern von der empfangenen lokalen Kanalliste entsprechenden Daten in einem Speicher (24).

12. Verfahren nach Anspruch 11, bei dem der Feststellungsschritt den Schritt umfaßt: Vergleichen eines Kanals, auf den der Funkrufempfänger (14) momentan eingestellt ist, mit einem Eintrag in dem Index.

## Revendications

1. Procédé d'utilisation d'un radiorécepteur de téléappel (14) dans un système de téléappel comprenant :
une pluralité desdits récepteurs (14) qui constituent des radiorécepteurs de téléappel mobiles (14), individuellement adressables, pour recevoir des signaux contenant des messages de téléappel, chacun desdits radiorécepteurs de téléappel (14) contenant une liste locale respective de canaux qu'il balaie pour trouver un canal particulier sur lequel il peut recevoir, fiablement, lesdits messages de téléappel, et contenant, en outre, des informations identifiant ledit canal particulier sur lequel il fonctionne à tout moment particulier ; et
une pluralité d'émetteurs (12) dont chacun émet le même flux de données, y compris des messages de téléappel et une pluralité desdites listes locales de canaux,
le procédé étant caractérisé par les étapes consistant à :
recevoir sur ledit radiorécepteur de téléappel (14) ladite pluralité de listes locales de canaux transmise et à utiliser lesdites listes locales de canaux reçues avec lesdites informations stockées concernant un canal particulier pour permettre audit radiorécepteur de téléappel (14) de ne pas tenir compte de certaines listes locales de canaux reçues et de stocker une seule liste locale de canaux reçue concernant ledit canal particulier stocké.

2. Procédé d'exploitation d'un système de téléappel incluant une pluralité d'émetteurs (12) et une pluralité de radiorécepteurs de téléappel mobiles (14), individuellement adressables, pour recevoir des signaux contenant des messages de téléappel, le procédé comprenant les étapes consistant à stocker, dans chacun desdits radiorécepteurs de téléappel (14), une liste locale de canaux respective qu'il balaie pour trouver un canal particulier sur lequel il peut recevoir, fiablement, lesdits messages de téléappel, et stocker dans chacun desdits radiorécepteurs de téléappel (14) des informations identifiant ledit canal particulier sur lequel il fonctionne à un moment particulier,
caractérisé par les étapes supplémentaires suivantes consistant à :
émettre, depuis chaque émetteur (12), le même flux de données, y compris des messages de téléappel et une pluralité desdites listes locales de canaux et, à chacun desdits radiorécepteurs de téléappel (14)
recevoir ladite pluralité de listes locales de canaux émise et utiliser lesdites listes locales de canaux reçues avec lesdites informations stockées concernant un canal particulier pour permettre au radiorécepteur de téléappel (14) de ne pas tenir compte de certaines listes locales de canaux reçues et de stocker une seule liste locale de canaux reçue concernant ledit canal particulier stocké.

3. Procédé selon la revendication 1 ou la revendication 2 incluant l'étape consistant à comparer lesdites informations stockées concernant un canal particulier à un canal cité dans une desdites listes locales de canaux reçues et à adopter une liste locale de canaux qui désigne ledit canal particulier sur lequel est actuellement accordé ledit radiorécepteur de téléappel (14).

4. Procédé selon la revendication 3, dans lequel ladite étape de comparaison comprend la comparaison desdites informations concernant un canal particulier à un premier canal cité dans lesdites listes locales de canaux reçues.

5. Procédé selon la revendication 1 ou la revendication 2, dans lequel ladite étape de réception comprend les opérations suivantes :
activation intermittente dudit radiorécepteur de téléappel (14) pour recevoir au moins une première donnée et une seconde donnée, ladite première donnée constituant une première entrée de ladite liste locale de canaux reçue ;
détermination du moment de la prochaine activation, en se basant au moins en partie sur ladite première donnée conjointement auxdites informations stockées concernant un canal particulier;
activation d'après ladite opération de détermination et réception d'une liste locale de canaux concernant la zone géographique dans laquelle fonctionne le radiorécepteur de téléappel (14).

6. Procédé selon la revendication 5, dans lequel ladite première donnée et ladite seconde donnée constituent des entrées d'un répertoire de listes locales de canaux reçues.

7. Procédé selon la revendication 5, incluant l'étape consistant à utiliser ladite seconde donnée pour déterminer le moment de la prochaine activation d'après la relation entre la première donnée et le canal sur lequel est actuellement accordé le radiorécepteur de téléappel (14).

8. Procédé selon la revendication 7, dans lequel l'étape d'activation comprend, en outre, l'activation visant à recevoir une troisième donnée ; le procédé comprenant, en outre, l'étape consistant à utiliser ladite troisième donnée pour déterminer le moment de la prochaine activation d'après la relation entre la première donnée et le canal sur lequel est actuellement accordé le radiorécepteur de téléappel (14).

9. Procédé selon la revendication 2, dans lequel ladite étape d'émission comprend l'étape consistant à :
émettre une pluralité de listes locales de canaux et au moins une donnée s'y rapportant ;
et ladite étape de réception inclut l'étape consistant à recevoir ladite donnée et à l'utiliser conjointement auxdites informations stockées concernant un canal particulier pour optimiser la recherche, dans ladite pluralité de listes locales de canaux, d'une liste locale de canaux concernant la zone géographique dans laquelle fonctionne ledit radiorécepteur de téléappel (14).

10. Procédé selon la revendication 1 ou la revendication 2, dans lequel ladite étape de réception comprend les étapes consistant à :
a) activer, par intermittence, ledit radiorécepteur de téléappel (14) pour recevoir des informations sur les canaux;
b) décider, d'après lesdites informations sur les canaux et le canal sur lequel est actuellement accordé ledit radiorécepteur de téléappel (14), s'il faut recevoir une liste locale de canaux associée auxdites informations sur les canaux, et, si c'est le cas, la réception de ladite liste locale de canaux ;
c) si l'étape b) aboutit à la décision de ne pas recevoir une liste locale de canaux associée auxdites informations sur les canaux, décider alors, au moins en partie d'après lesdites informations sur les canaux et le canal sur lequel est actuellement accordé ledit radiorécepteur de téléappel (14), au moment de la prochaine activation dudit radiorécepteur de téléappel ;
d) activer ledit radiorécepteur de téléappel (14) en fonction de ladite étape de décision c) pour recevoir au moins des informations sur un canal supplémentaire ;
e) répéter les étapes b), c) et d) avec les informations sur un canal supplémentaire jusqu'à la réception d'une liste locale de canaux.

11. Procédé selon la revendication 1 ou la revendication 2, dans lequel ladite étape de réception comprend les opérations consistant à :
recevoir un répertoire contenant une pluralité d'entrées désignant une pluralité de listes locales de canaux ;
vérifier celles desdites entrées qui renvoient à une liste locale de canaux utilisable dans la zone actuelle du récepteur;
recevoir une liste locale de canaux désignée par ladite entrée vérifiée ; et
stocker en mémoire (24) les données correspondant à ladite liste locale de canaux reçue.

12. Procédé selon la revendication 11, dans lequel l'étape de vérification comprend l'étape consistant à comparer, à une entrée dudit répertoire, un canal sur lequel est actuellement accordé le radiorécepteur de téléappel (14).
